(19) 

Europäisches
Patentamt
European
Patent Office
Office européen
des brevets

(11)  **EP 4 407 517 A1**

(12)  **EUROPEAN PATENT APPLICATION**

(43) Date of publication:
 **31.07.2024  Bulletin 2024/31**

(21) Application number: **24153715.8**

(22) Date of filing: **24.01.2024**

(51) International Patent Classification (IPC):
 **G06N 3/045** $^{(2023.01)}$

(52) Cooperative Patent Classification (CPC):
 **G06N 3/045; G06N 3/0499**

(84) Designated Contracting States:
 **AL AT BE BG CH CY CZ DE DK EE ES FI FR GB
 GR HR HU IE IS IT LI LT LU LV MC ME MK MT NL
 NO PL PT RO RS SE SI SK SM TR**
 Designated Extension States:
 **BA**
 Designated Validation States:
 **GE KH MA MD TN**

(30) Priority: **26.01.2023  JP 2023010487**

(71) Applicant: **Canon Kabushiki Kaisha
 Tokyo 146-8501 (JP)**

(72) Inventor: **OGAWA, Shuhei
 Ohta-ku, Tokyo, 146-8501 (JP)**

(74) Representative: **TBK
 Bavariaring 4-6
 80336 München (DE)**

(54) **INFORMATION PROCESSING APPARATUS AND CONTROL METHOD THEREOF**

(57)  An information processing apparatus (100) comprises: obtaining means (201, 202) for obtaining input data; generating means (203) for generating a feature amount from the obtained input data; and processing means (204) for irregularly mixing a plurality of tokens included in the feature amount in a spatial direction of the generated feature amount.

**F I G. 2**

100

IMAGE OBTAINING UNIT — 201

PARAMETER OBTAINING UNIT — 202

FEATURE AMOUNT GENERATION UNIT — 203

FEATURE AMOUNT PROCESSING UNIT — 204

POST-PROCESSING UNIT — 205

206
STORAGE
UNIT

**Description**

BACKGROUND OF THE INVENTION

Field of the Invention

The present invention relates to generation of a feature amount.

Description of the Related Art

In recent years, the accuracy of image recognition techniques such as image classification, object detection, and object tracking has remarkably improved due to advent of a deep neural network (DNN). There are various DNN structures, and in image recognition, a convolutional neural network (CNN) in which convolution operations are performed in multiple layers is mainly used. On the other hand, in Dosovitskiy et al., "An Image is Worth 16x16 Words: Transformers for Image Recognition at Scale", arXiv: 2010.11929, 2020 (non-patent literature 1), there is proposed a Vision Transformer (ViT) that applies Transformer used in natural language processing is applied to image recognition. Transformer is a structure representing the relationship between words using Attention in natural language processing. However, in ViT, the number of parameters and the calculation amount are large.

In Yu et al., "Metaformer is Actually What You Need for Vision", CVPR, 2021 (non-patent literature 2), a method of changing Multi-head Self Attention (MSA) that is the key of operations in ViT to lighter processing is proposed. More specifically, MSA is changed to processing such as Pooling or Multi-Layer Perceptron (MLP). Also, in Liu et al., "Swin Transformer: Hierarchical Vision Transformer using Shifted Windows", arXiv: 2103.14030, 2021 (non-patent literature 3), there is proposed a method of dividing feature amounts into several rectangular windows and performing MSA for each window.

The above-described MSA, Pooling, or MLP is processing of performing mixing (mix) of feature amounts at token level. If all feature amounts are efficiently mixed in this processing, various patterns can readily be recognized, and as a result, the recognition accuracy improves.

In the above-described conventional techniques, however, it is difficult to efficiently mix all feature amounts. For example, in non-patent literature 3, window division is performed while shifting the window by 1/2 its size for each layer, thereby causing tokens that belong to different groups in a certain layer to belong to the same group in another layer. However, since tokens of 1/2 the window size overlap tokens mixed in the preceding layer, it is difficult to efficiently mix a larger number of types of tokens. On the other hand, if a larger number of types of tokens are to be mixed, the number of parameters and the calculation amount of Attention increase.

SUMMARY OF THE INVENTION

The present invention in its first aspect provides an information processing apparatus as specified in claims 1 to 11.

The present invention in its second aspect provides a control method of an information processing apparatus as specified in claims 12 to 15.

The present invention in its third aspect provides a program as specified in claim 16.

The present invention makes it possible to implement a more accurate task while suppressing an increase of the number of parameters or a calculation amount.

Further features of the present invention will become apparent from the following description of exemplary embodiments (with reference to the attached drawings).

BRIEF DESCRIPTION OF THE DRAWINGS

The accompanying drawings, which are incorporated in and constitute a part of the specification, illustrate embodiments of the invention and, together with the description, serve to explain the principles of the invention.

Fig. 1 is a view showing the hardware configuration of an information processing apparatus;
Fig. 2 is a view showing the functional configuration of the information processing apparatus;
Fig. 3 is a view showing the detailed configuration of a feature amount processing unit;
Fig. 4 is a view showing the detailed functional configuration of each layer;
Fig. 5 is a flowchart showing the procedure of processing of the information processing apparatus;
Fig. 6 is a detailed flowchart of processing in each layer;
Figs. 7A to 7D are views for explaining processing in each layer;

Figs. 8A to 8C are views for explaining a likelihood map and a BB map for an input image;

Fig. 9 is a flowchart showing processing by a CNN;

Fig. 10 is a flowchart showing processing by an MLP;

Fig. 11 is a view showing the detailed functional configuration of each layer (second modification);

Figs. 12A and 12B are detailed flowcharts of local mix;

Figs. 13A to 13C are views for explaining local mix;

Fig. 14 is a view showing the detailed functional configuration of each layer (third modification);

Fig. 15 is a detailed flowchart of processing in each layer (third modification);

Fig. 16 is a view showing the functional configuration of an information processing apparatus (second embodiment);

Fig. 17 is a flowchart showing the procedure of processing of the information processing apparatus (second embodiment);

Figs. 18A and 18B are views for explaining a template image and a search image;

Fig. 19 is a detailed flowchart of matching (S1705);

Fig. 20 is a view showing the functional configuration of an information processing apparatus (third embodiment);

Fig. 21 is a flowchart showing the procedure of processing of the information processing apparatus (third embodiment); and

Fig. 22 is a detailed flowchart of identification (S2101).

## DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

(First Embodiment)

As the first embodiment of an information processing apparatus according to the present invention, an information processing apparatus that performs an object detection task using a neural network (NN) will be described below as an example. Note that in the first embodiment, the object detection task means a task for detecting the position and size of an object from an image. In the following explanation, processing of performing mixing (mix) of feature amounts at token level is called "token mix". MSA, Pooling, and MLP described in "BACKGROUND" are a kind of token mix.

<Hardware Configuration of Information Processing Apparatus>

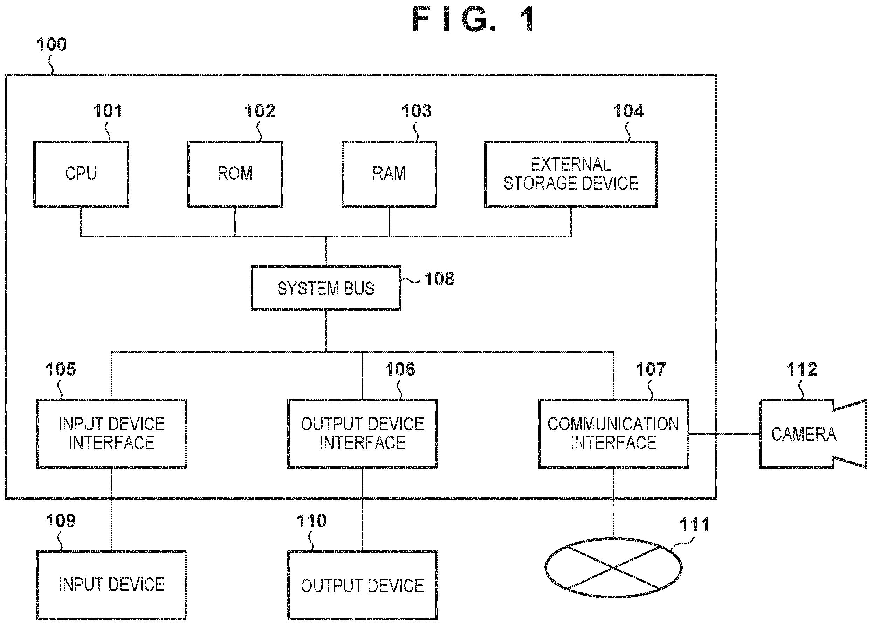

Fig. 1 is a view showing the hardware configuration of an information processing apparatus 100. The information processing apparatus 100 performs image processing including an object detection task to be described later. Note that Fig. 1 shows a single information processing apparatus, but functions may be distributed to a plurality of information processing apparatuses. If the apparatus is formed by a plurality of information processing apparatuses, these are connected via a local area network (LAN) or the like to be communicable to each other.

An input device 109, an output device 110, a network 111 such as the Internet, and a camera 112 are connected to the information processing apparatus 100. Note that the connection method is not limited to that shown in Fig. 1. For example, the devices may individually be connected by wires, or may be connected via wireless communication. Also, the information processing apparatus 100 and the input device 109 or the output device 110 may be independent devices, or may be an integrated device (for example, a touch panel display).

The input device 109 is a device configured to perform user input to the information processing apparatus 100. The input device may be, for example, a pointing device or a keyboard. The output device 110 is a device such as a monitor capable of displaying an image and characters to display data held by the information processing apparatus 100, data supplied by user input, and a program execution result. The camera 112 is an image capturing device capable of obtaining a captured image. The camera 112 may obtain continuous captured images having a predetermined interval $\Delta t$, which are to be input to, for example, an image obtaining unit 201 to be described later.

A CPU 101 is a central processing unit that controls the entire information processing apparatus 100. The CPU 101 performs various kinds of software (computer programs) stored in, for example, an external storage device 104, thereby causing the information processing apparatus 100 to implement various kinds of functions and operations to be described later. A ROM 102 is a read only memory configured to store programs and parameters which do not need to be changed. A RAM 103 is a random access memory configured to temporarily store programs and data supplied from an external device or the like.

The external storage device 104 is an external storage device readable by the information processing apparatus 100, and stores programs and data in a long term. The external storage device 104 may be, for example, a hard disk and a memory card stationarily installed in the information processing apparatus 100. Alternatively, for example, the external storage device 104 may be a flexible disk (FD), an optical disk such as a compact disk (CD), a magnetic or optical card, an IC card, or a memory card, which are detachable from the information processing apparatus 100.

An input device interface 105 is an interface to the input device 109. An output device interface 106 is an interface to the output device 110. A communication interface 107 is an interface to be connected to the network 111 such as the Internet or the camera 112. A system bus 108 is a bus that communicably connects the units in the information processing apparatus 100.

Note that Fig. 1 shows a form in which the camera 112 is directly connected to the information processing apparatus 100 via the communication interface 107, but the camera 112 may be connected to the information processing apparatus 100 via the network 111 or the like. The camera 112 need not be a single camera, and a plurality of cameras may be connected.

As described above, programs that implement various kinds of functions and operations are stored in the external storage device 104. When performing a program, the CPU 101 reads out the program to the RAM 103. The CPU 101 performs the program, thereby implementing various kinds of functions and operations. Note that various kinds of programs and setting data sets are assumed to be stored in the external storage device 104, but these may be stored in an external server (not shown). In this case, the information processing apparatus 100 obtains the programs and the setting data sets from the external server via, for example, the network 111.

<Functional Configuration of Information Processing Apparatus>

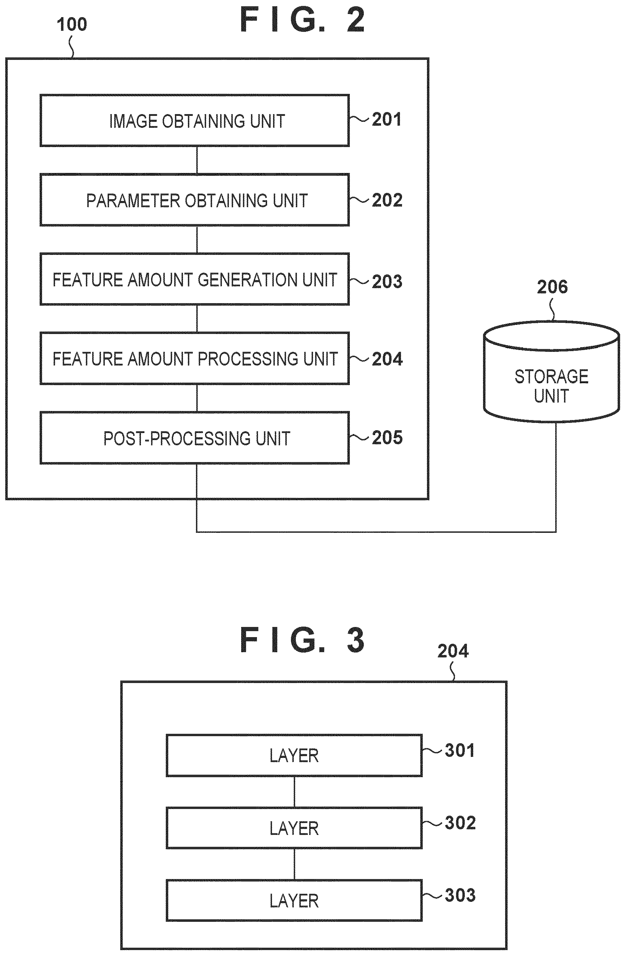

Fig. 2 is a view showing the functional configuration of the information processing apparatus 100. As described above, in this embodiment, the information processing apparatus 100 performs an object detection task using an NN. Note that the NN that performs the object detection task is used by a post-processing unit 205 configured to perform a task. The NN can be used for other purposes even in a feature amount generation unit 203 and a feature amount processing unit 204 to be described later.

The information processing apparatus 100 includes the image obtaining unit 201, a parameter obtaining unit 202, the feature amount generation unit 203, the feature amount processing unit 204, and the post-processing unit 205. As described above, these function units are implemented by the CPU 101 performing a program. These function units are communicably connected to a storage unit 206. Note that Fig. 2 shows the storage unit 206 existing outside the information processing apparatus 100, but the storage unit 206 may be included in the information processing apparatus 100.

The image obtaining unit 201 obtains image data of an object captured by the image capturing device. The object is, for example, an object such as a person or an animal. A case where a person is detected will be described below. The parameter obtaining unit 202 obtains parameters associated with the NN.

The feature amount generation unit 203 generates feature amounts from the image data obtained from the image obtaining unit 201. The feature amounts are generated using a CNN or the like. The feature amount processing unit 204 performs an operation for the feature amounts obtained from the feature amount generation unit 203, thereby mixing the feature amounts.

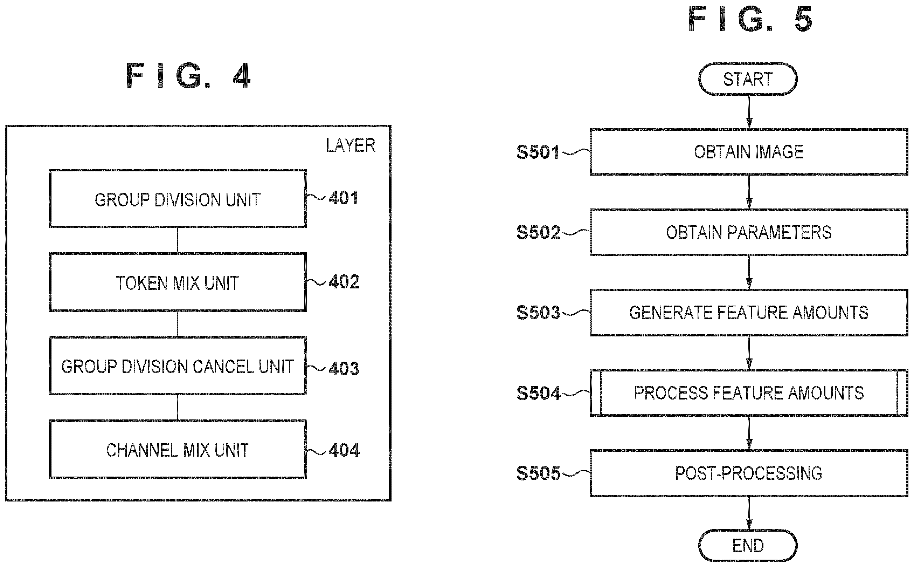

Fig. 3 is a view showing the detailed configuration of the feature amount processing unit 204. That is, the feature amount processing unit 204 is formed by, for example, three layers, and the output of each layer is the input to the next layer. Fig. 4 is a view showing the detailed functional configuration of each layer.

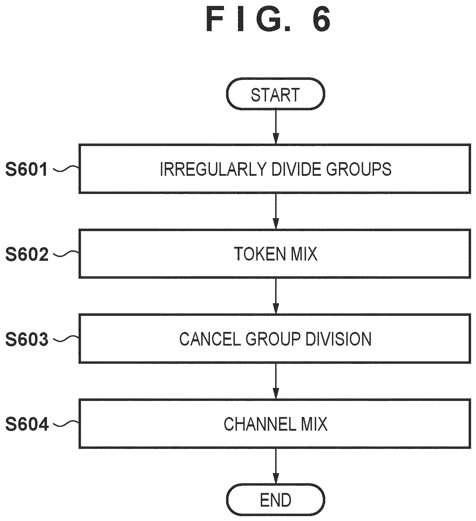

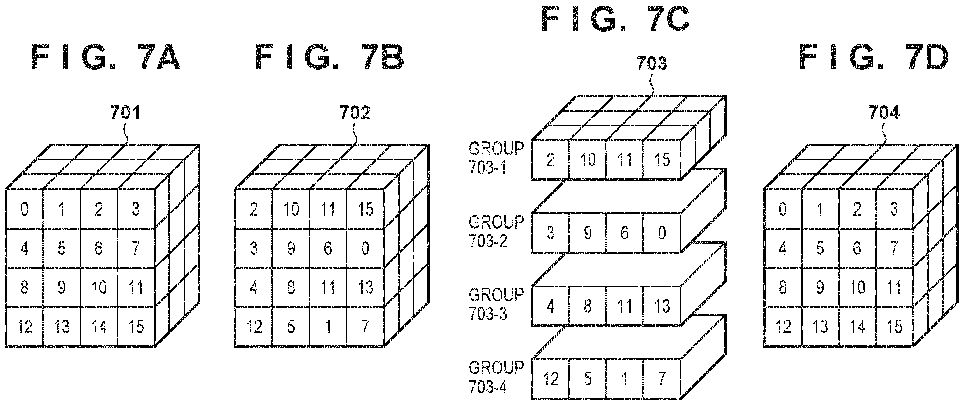

A group division unit 401 divides feature amounts into several groups. A token mix unit 402 performs processing (token mix) such as MLP or MSA for each feature amount divided by the group division unit 401. A group division cancel unit 403 returns the position of each token of the token-mixed feature amounts to the original position (a position in a spatial direction before group division). A channel mix unit 404 mixes the feature amounts in a channel direction. The detailed operations of the function units shown in Fig. 4 will be described later with reference to Figs. 6 and 7A to 7D.

Based on the feature amounts output from the feature amount processing unit 204, the post-processing unit 205 forms a bounding box (BB) representing the position and size of the person that is the object and outputs the BB.

<Operation of Information Processing Apparatus>

Fig. 5 is a flowchart showing the procedure of processing of the information processing apparatus 100. Note that the information processing apparatus 100 need not always perform all steps to be described in this flowchart.

In step S501, the image obtaining unit 201 obtains image data of a captured object. Note that the image obtaining unit 201 may obtain image data generated by the camera 112 connected to the information processing apparatus 100, or may obtain image data stored in the external storage device 104.

In step S502, the parameter obtaining unit 202 obtains parameters necessary for the operation of the NN. More specifically, parameters of an operation such as CNN or MLP and parameters necessary for group division to be described later are obtained.

In step S503, the feature amount generation unit 203 generates feature amounts from the image data obtained by the image obtaining unit 201. The feature amounts can be generated using, for example, a CNN.

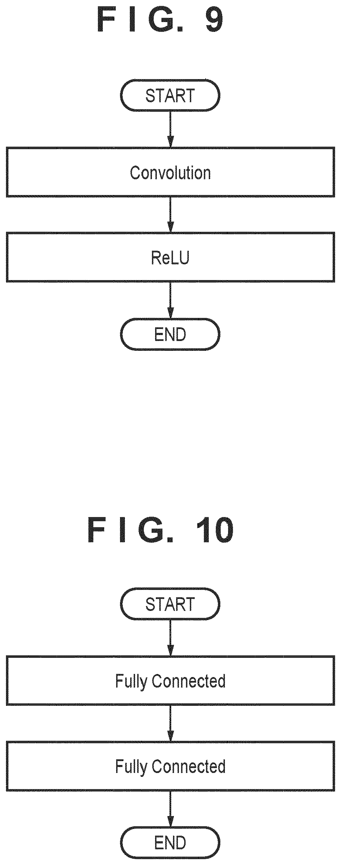

Fig. 9 is a flowchart showing processing by a CNN. The CNN is formed by a convolution operation (Convolution) and a nonlinear operation (ReLU or the like). These elements may each include a plurality of elements, or the nonlinear operation such as ReLU may be absent. Average Pooling or Max Pooling may be combined. Also, the feature amount generation unit 203 may be formed as MLP or MSA described in "BACKGROUND". Detailed feature amount generation in the feature amount generation unit 203 is not limited to a specific method.

In step S504, the feature amount processing unit 204 processes the feature amounts obtained by the feature amount generation unit 203. As described above, the feature amount processing unit 204 is formed by a plurality of layers (three layers 301 to 303 shown in Fig. 3).

Fig. 6 is a detailed flowchart of processing (token mix based on group division) in each layer. Figs. 7A to 7D are views for explaining processing in each layer.

In step S601, the group division unit 401 irregularly divides feature amounts into groups. As an example of irregular division to groups, details of random group division processing will be described with reference to Figs. 7A to 7D.

Fig. 7A shows feature amounts generated by the feature amount generation unit 203 (in the case of the layer 301), or feature amounts output from the layer of the preceding stage (in the case of the layer 302 or 303). In the feature amounts shown in Fig. 7A, the vertical direction and the horizontal directions indicate "spatial direction", and the depth direction indicates "channel direction". As for the feature amounts generated by the feature amount generation unit 203, the elements in the spatial direction are assigned numbers 0 to 15.

Fig. 7B shows an example of rearranging the feature amounts shown in Fig. 7A at random in the spatial direction. This is obtained by, for example, assigning initialized weights at random to the elements (0 to 15) of the feature amounts in the spatial direction and rearranging the elements in the spatial direction in the same order as the order of rearranging the weights in descending or ascending order. The weights for rearrangement may be obtained by the parameter obtaining unit 202. In place of weights, random seeds may be stored in the storage unit 206, and a weight may be generated each time in accordance with the random seeds. Detailed rearrangement in the group division unit 401 is not limited to a specific method.

Fig. 7C is a view showing a state in which the weights rearranged at random are divided into groups in the spatial direction. Fig. 7C shows an example in which the feature amounts are divided into four groups in the height direction. Group division is performed such that each group includes the same number of tokens. This division is merely an example, and the feature amounts may be divided in the widthwise direction or may be divided into an arbitrary shape. The division method is not limited. Note that once the division method is decided, the same division is done always. That is, the division method is the same in learning and inference. Also, the division method is not changed depending on input data.

In step S602, the token mix unit 402 performs token mix for each divided group. Examples of the token mix method are MLP in which a plurality of Fully-Connected (FC) layers are connected, as shown in Fig. 10, CNN, and MSA.

Note that token mix by MSA is implemented by equation (1) below. Q, K, and V are obtained via FC for features divided into groups.

$$MSA(Q, K, V) = Concat(head_1, head_2, \dots, head_n)$$

$$head_i = Attention(QW_i^Q, KW_i^K, VW_i^V)$$

$$Attention(Q, K, V) = softmax\left(\frac{QK^T}{\sqrt{d_k}}\right)V$$

$$softmax(x) = \frac{e^x}{\sum_i e^{x_i}} \qquad \dots(1)$$

In step S603, the group division cancel unit returns the elements token-mixed in each group by the token mix unit 402 to the original positions concerning the spatial direction. Fig. 7D shows a feature amount 704 that has undergone group division cancel. That is, a rearranged feature amount 702 is returned to the same order as a feature amount 701.

In step S604, the channel mix unit 404 mixes in the channel direction (the depth direction in Fig. 7D) for the feature amounts obtained in step S603. Channel mix may be CNN as shown in Fig. 9 or may be MLP as shown in Fig. 10. Detailed channel mix by the channel mix unit 404 is not limited to a specific method.

In step S505, the post-processing unit 205 specifies a Bonding Box (to be abbreviated as BB hereinafter) representing the position/size of a person included in the input image, based on the feature amounts obtained in step S504. As the method of specifying the BB of the person from the output of the NN, a method described in literature A below can be used.

(Literature A) Tian et al., "FCOS: Fully Convolutional One-Stage Object Detection", arXiv: 1904.01355, 2019

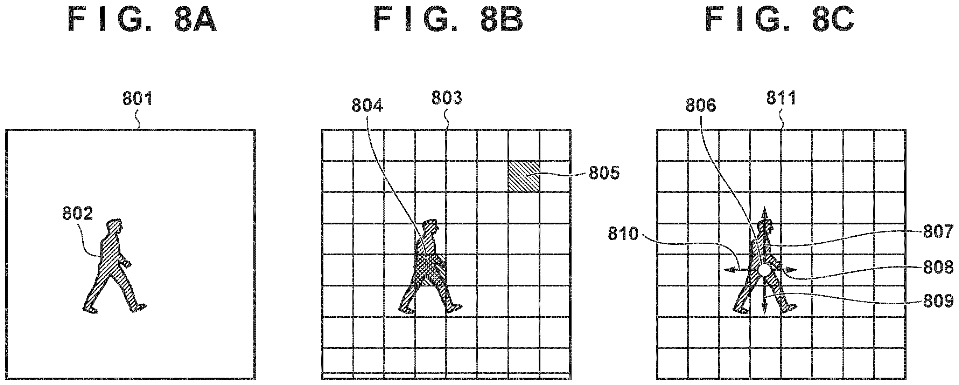

Figs. 8A to 8C are views for explaining a likelihood map and a BB map output from the NN for an input image. Fig. 8A exemplarily shows an input image 801. The input image 801 includes a person 802.

Fig. 8B shows a likelihood map 803 inferred by the NN for the input image 801. In the person likelihood map 803, as for grid regions, a large value is output for a region where the person exists, and a small value is output for a region other than the person. In Fig. 8B, a large value (for example, as compared to a threshold) is output for a grid region 804, and it is suggested that a person exists at this position. On the other hand, a small value is output for a grid region 805, and it is suggested that no person exists at this position.

Fig. 8C shows a BB map 811 inferred by the NN for the input image 801. In each grid region of the BB map 811, values indicating distances from the grid region center to the upper, lower, left, and right ends of the person are output. For example, in a grid region 806 corresponding to the grid region 804 of the person likelihood map 803, a distance 807 to the upper end of the person, a distance 808 to the right end, a distance 809 to the lower end, and a distance 810 to the left end are output. This makes it possible to form a BB corresponding to the person 802. As a learning method concerning object detection, a method described in literature A described above can be used.

As described above, according to the first embodiment, feature amounts are divided irregularly (at random) into groups in the spatial direction, and token mix is performed for each divided group. With this configuration, the tokens mixed in the layers (layers 301 to 303) overlap little. It is therefore possible to mix a larger number of types of tokens while suppressing an increase of the number of parameters or a calculation amount. As a result, various patterns can easily be detected, and the detection accuracy can be improved. "Irregular" means not only "random" obtained from a random function but also a changeable rule that changes every time division is performed, a rule without periodicity, or a rule that is not prepared in advance by calculation.

(First Modification)

In the description of the first embodiment, in step S601, the group division unit 401 divides feature amounts into groups at random concerning only the spatial direction. However, group division may be performed at random in both the spatial direction and the channel direction. Since tokens of more patterns can readily be mixed, the recognition accuracy improves.

(Second Modification)

In the description of the first embodiment, in the processing of each layer in the feature amount processing unit 204, the group division unit 401 divides input feature amounts into groups. However, input feature amounts may undergo predetermined processing and are then divided into groups. For example, as such predetermined processing, local token mix can be performed.

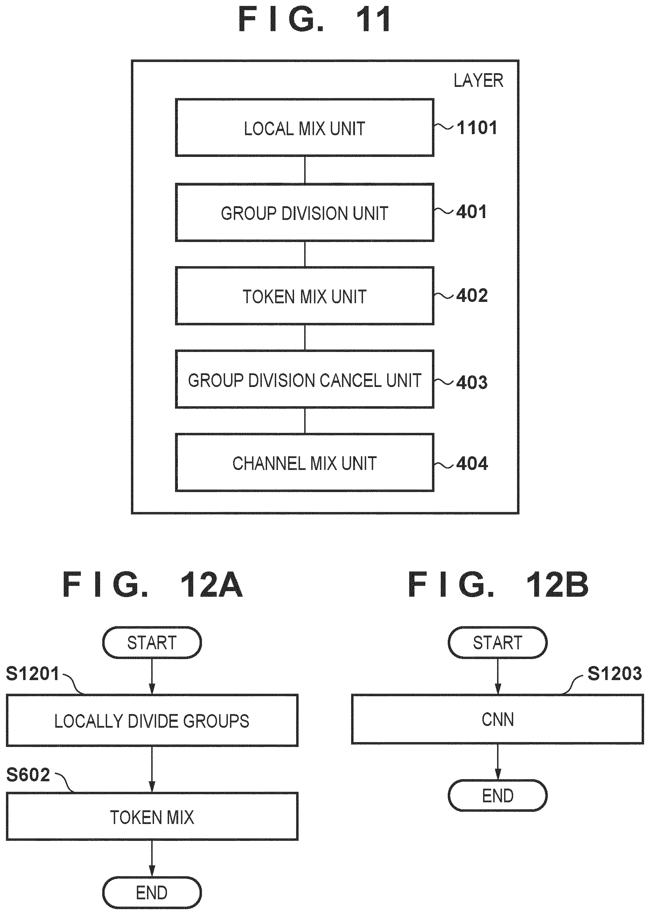

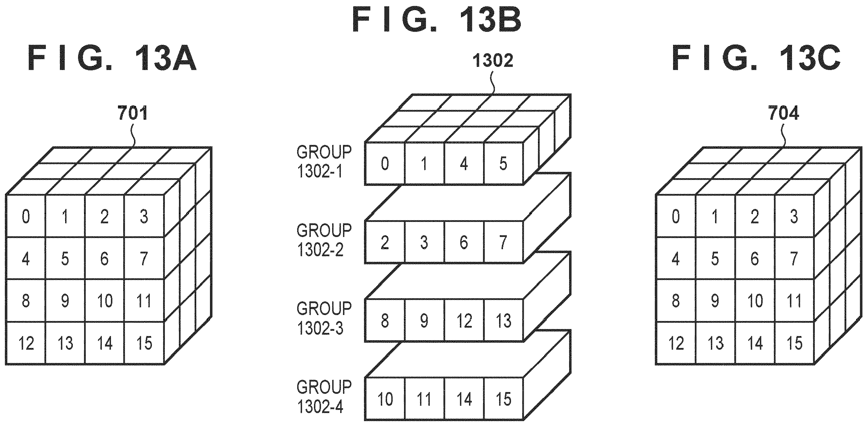

Fig. 11 is a view showing the detailed functional configuration of each layer in the second modification. More specifically, a local mix unit 1101 is added to the preceding stage of the group division unit 401 in the first embodiment (Fig. 4). Also, Fig. 12A is a detailed flowchart of local mix, and Figs. 13A to 13C are views for explaining local mix.

In step S1201, the local mix unit 1101 divides feature amounts into groups, as shown in Fig. 13B. This is (local) group division of feature amounts in which spatially close elements (in $2 \times 2$ elements in Fig. 13A) are put in the same group.

In step S1202, the local mix unit 1101 performs, using CNN, token mix for the feature amounts output in step S1201 (Fig. 12B).

When local token mix is thus performed in advance, the group division unit 401 can readily mix more tokens. As a result, recognition can be performed in consideration of both the local relationship and the global relationship of feature amounts.

(Third Modification)

In the description of the first embodiment, in the processing of each layer in the feature amount processing unit 204, token mix in the spatial direction is performed, and after that, token mix in the channel direction is performed. However, token mix in the spatial direction and that in the channel direction may be performed in combination.

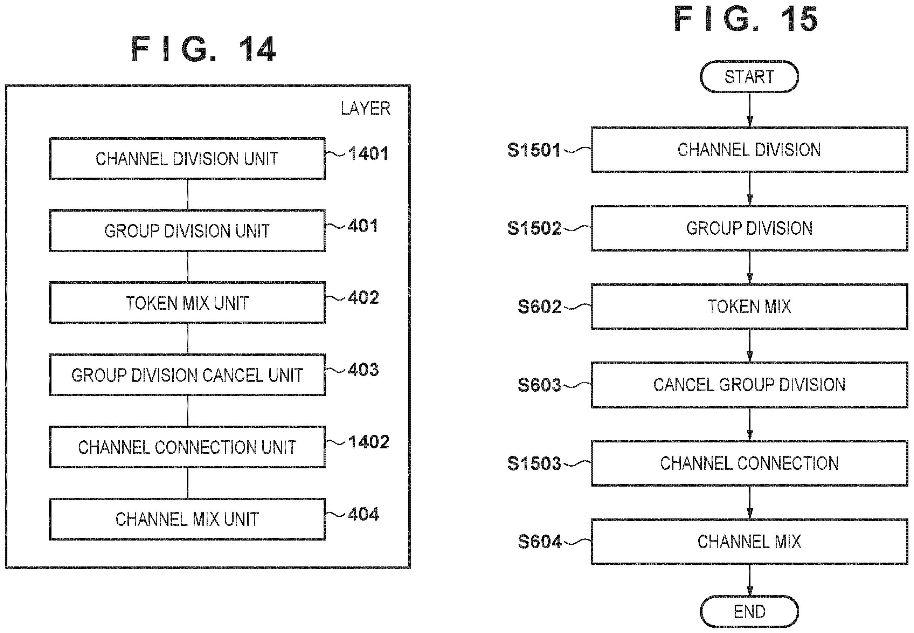

Fig. 14 is a view showing the detailed functional configuration of each layer in the third modification. More specifically, a channel division unit 1401 is added to the preceding stage of the group division unit 401 in the first embodiment (Fig. 4), and a channel connection unit 1402 is added to the preceding stage of the channel mix unit 404. Fig. 15 is a detailed flowchart of processing in each layer.

In step S1501, the channel division unit 1401 divides feature amounts to a predetermined number in the channel direction. The predetermined number can be decided empirically.

In step S1502, the group division unit 401 divides the predetermined number of feature amounts divided in the channel direction into groups. The group division method may change for each feature amount divided in the channel direction. For example, irregular group division (Figs. 7A to 7D) and local group division (Figs. 13A to 13C) may be combined.

In step S602, the token mix unit 402 performs token mix for each group divided in the channel direction.

In step S603, the group division cancel unit returns the token-mixed elements to the original positions concerning the spatial direction.

In step S1503, the channel connection unit 1402 connects the feature amounts output in step S603 in the channel direction and cancels division in the channel direction.

In step S604, the channel mix unit 404 performs mix in the channel direction for the feature amounts obtained in step S1503.

In this way, after the feature amounts are divided in the channel direction, a different group division method is combined, thereby increasing division patterns in group division. Since tokens of more patterns can readily be mixed, the recognition accuracy improves.

(Second Embodiment)

In the second embodiment, an information processing apparatus that performs a tracking task for detecting a specific target object from an image and tracking this will be described. The hardware configuration of the information processing apparatus is the same as in the first embodiment (Fig. 1), and a description thereof will be omitted. Also, in this embodiment, the tracking task is assumed to be performed in accordance with a method of literature B below. For learning as well, a method described in literature B can be used.

(Literature B) Zhang, et al., "Ocean: Obj ect-aware Anchor-free Tracking", ECCV 2020

<Functional Configuration of Information Processing Apparatus>

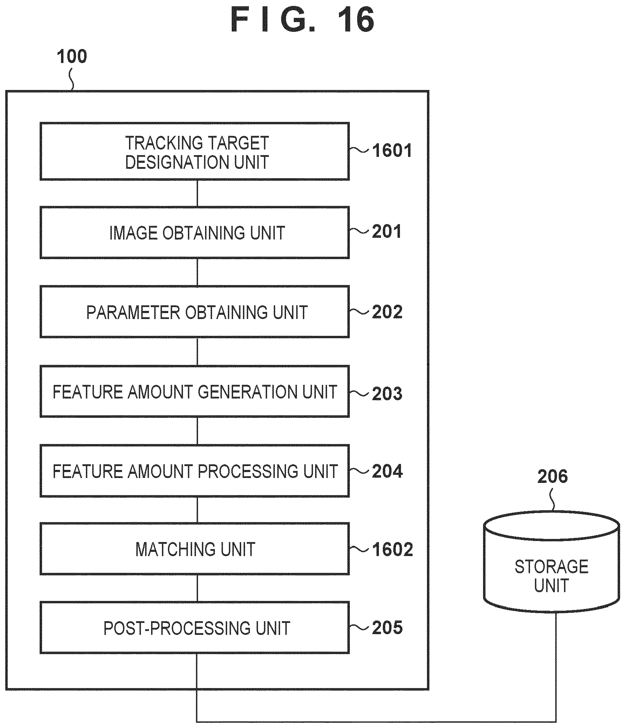

Fig. 16 is a view showing the functional configuration of the information processing apparatus according to the second embodiment. As described above, in this embodiment, an information processing apparatus 100 performs a tracking task using an NN. Note that the NN that performs the tracking task is used by a post-processing unit 205. The NN can be used for other purposes even in a feature amount generation unit 203 and a feature amount processing unit 204 to be described later.

A tracking target designation unit 1601 decides a tracking target in an image in accordance with an instruction designated by an input device 109. For example, a target image is displayed on a touch panel display, and user touch on a tracking target in the displayed image is accepted, thereby deciding the tracking target. Note that instead of using the designation from the user, a main object or the like in the image may automatically be detected and decided. The decision may be made based on both the designation by the user and an object detection result in the image. As a method of automatically detecting a main object/object from an image, for example, a method described in Japanese Patent No. 6556033 or literature C below can be used.

(Literature C) Liu, "SSD: Single Shot Multibox Detector", In ECCV, 2016

<Operation of Information Processing Apparatus>

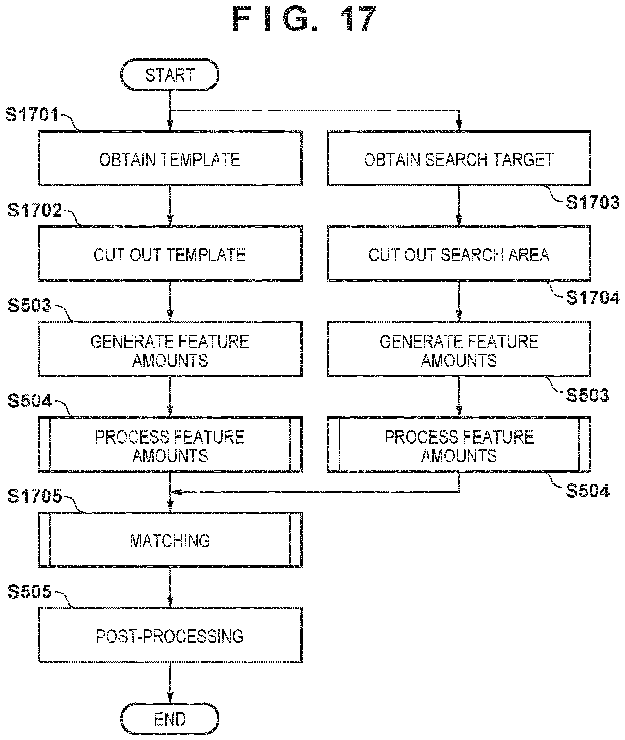

Fig. 17 is a flowchart showing the procedure of processing of the information processing apparatus.

In step S1701, an image obtaining unit 201 obtains image data (template image) in which a tracking target exists.

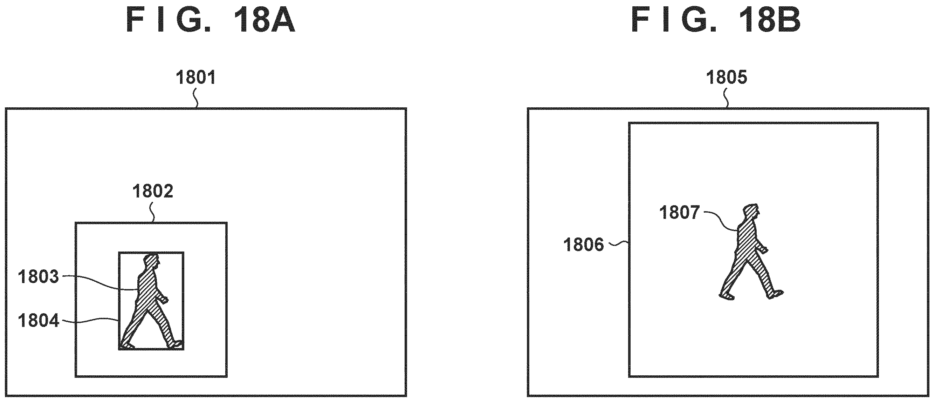

Fig. 18A is a view showing an example of a template image. An image 1801 is an original image that is obtained by the image obtaining unit 201 and serves as a template. A person 1803 is a tracking target. A BB 1804 is a BB representing the position and size of the tracking target (person 1803).

In step S1702, the image obtaining unit 201 cuts out an image on the periphery of the tracking target in the template image based on the position/size of the tracking target obtained by the tracking target designation unit 1601, and resizes the image. For example, a region whose size is a constant multiple of the size of the tracking target is cut out with respect to the position of the tracking target as the center. A partial region 1802 shown in Fig. 18A is an example of cutout of the periphery of the tracking target.

In step S1703, the image obtaining unit 201 obtains image data (search image) that is the target to search for the tracking target. An image 1805 shown in Fig. 18B is the search image, and a person 1807 is the tracking target.

In step S1704, the image obtaining unit 201 cuts out an image on the periphery of the tracking target in the search image, and resizes the image. For example, an image whose size is a constant multiple of the size of the tracking target is cut out with respect to the position of the tracking target in one frame (or before a predetermined time) as the center. A partial region 1806 shown in Fig. 18B is an example of cutout of the image as the search target.

In step S503, feature amounts are generated for the template image and the search range image, as in the first embodiment. In step S504, the feature amounts are processed for of the template image and the search range image, as in the first embodiment. That is, token mix based on irregular group division is performed.

In step S1705, a matching unit 1602 estimates the position/size of the tracking target in the search image based on the feature amounts of the cutout image of the template image and the feature amounts of the cutout image of the search image.

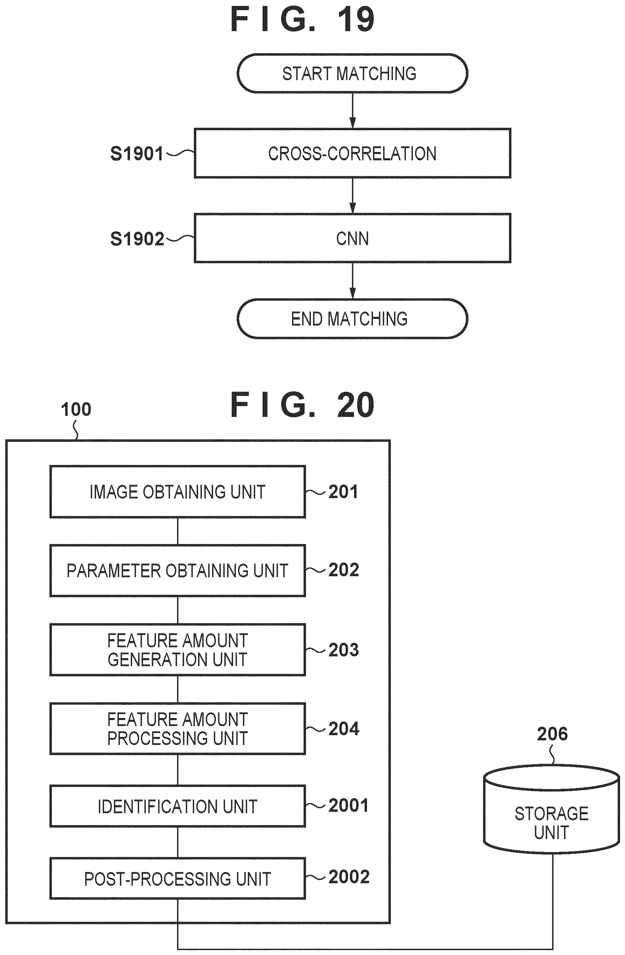

Fig. 19 is a detailed flowchart of matching (S 1705). In step S 1901, the matching unit 1602 calculates cross-correlation between the above-described two feature amounts. In step S 1902, the matching unit 1602 inputs the result of cross-correlation obtained in step S 1901 to a CNN, thereby obtaining a likelihood map and a BB map (Figs. 8B and 8C).

In step S505, a BB representing the position/size of the person included in the input image is specified based on the feature amounts obtained by the matching unit 1602, as in the first embodiment.

As described above, according to the second embodiment, for each of a template image and a search image, feature amounts are divided irregularly (at random) into groups in the spatial direction, and token mix is performed for each divided group. With this configuration, various patterns can easily be recognized. It is therefore possible to easily cope with a change of the posture or background of the tracking target, and the tracking accuracy improves.

(Third Embodiment)

In the third embodiment, an information processing apparatus that performs a class classification task for classifying an image into a preset class will be described. The hardware configuration of the information processing apparatus is the same as in the first embodiment (Fig. 1), and a description thereof will be omitted. Also, in this embodiment, the class classification task is assumed to be performed in accordance with a method of literature D below. For learning as well, a method described in literature D can be used.

(Literature D) Alex et al., "Imagenet Classification with Deep Convolutional Neural Networks", NIPS, 2012

<Functional Configuration and Operation of Information Processing Apparatus>

Fig. 20 is a view showing the functional configuration of an information processing apparatus according to the third embodiment. As described above, in this embodiment, an information processing apparatus 100 performs a class classification task using an NN. Note that the NN that performs the class classification task is used in an identification unit 2001 and a post-processing unit 2002. Another NN can be used even in a feature amount generation unit 203 and a feature amount processing unit 204 to be described later.

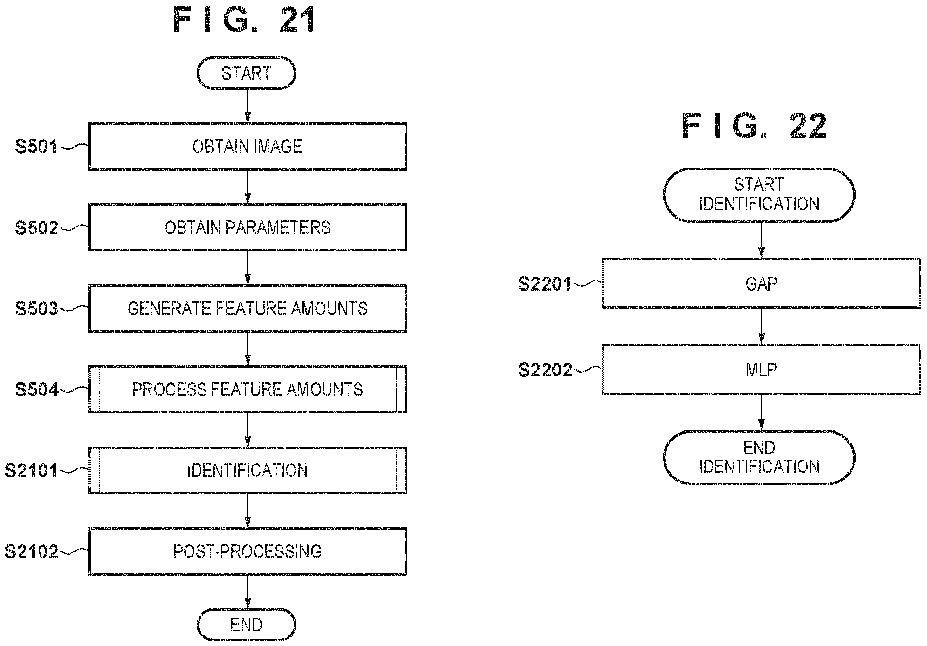

Fig. 21 is a flowchart showing the procedure of processing of the information processing apparatus according to the third embodiment.

In step S2101, the identification unit 2001 outputs feature amounts for class classification from feature amounts obtained from the feature amount processing unit 204.

Fig. 22 is a detailed flowchart of identification (S2101). In step S2201, the identification unit 2001 averages the feature amounts in the spatial direction using Global Average Pooling (GAP). In step S2202, the identification unit 2001 performs MLP and outputs feature amounts of the same dimensions as a predetermined number of classes, which is set in advance.

In step S2102, the post-processing unit 2002 outputs an index of a dimension having the highest value out of the feature amounts output in step S2101 (S2202) as the index of the class classification result. For example, if the third (index = "3") feature amount has the highest value, and the third class is "dog", the target object is classified to "dog".

As described above, according to the third embodiment, feature amounts are divided irregularly (at random) into groups in the spatial direction, and token mix is performed for each divided group. With this configuration, various patterns can easily be detected, and therefore, the accuracy of class classification improves.

(Fourth Modification)

In the above-described first to third embodiments, processing (object detection, tracking, and class classification) associated with image recognition has been described. However, the information processing apparatus can be applied not only to image recognition but also to prediction/recognition using time-series data and natural language processing using text data.

Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions. An information processing apparatus (100) comprises: obtaining means (201, 202) for obtaining input data; generating means (203) for generating a feature amount from the obtained input data; and processing means (204) for irregularly mixing a plurality of tokens included in the feature amount in a spatial direction of the generated feature amount.

**Claims**

1.  An information processing apparatus (100) comprising:

    obtaining means (201, 202) for obtaining input data;
    generating means (203) for generating a feature amount from the obtained input data; and
    processing means (204) for irregularly mixing a plurality of tokens included in the feature amount in a spatial direction of the generated feature amount.

2.  The apparatus according to claim 1, wherein the processing means comprises:

    first means (401) for irregularly dividing the plurality of tokens into a plurality of groups concerning the spatial direction of the feature amount, and
    second means (402) for mixing, for each of the plurality of groups, a plurality of tokens included in each group.

3.  The apparatus according to claim 2, wherein the processing means further comprises third means (403) for returning positions of a plurality of tokens obtained by mixing by the second means to positions in the spatial direction before dividing by the first means.

4.  The apparatus according to claim 2 or 3, wherein the first means divides the plurality of tokens into the plurality of groups in accordance with a weight set for each of the plurality of tokens.

5.  The apparatus according to claim 4, wherein the first means sets a weight for each of the plurality of tokens in accordance with a plurality of random seeds given in advance.

6.  The apparatus according to any of claims 2 to 5, wherein the first means irregularly divides the plurality of tokens into a plurality of groups concerning both the spatial direction and a channel direction of the feature amount.

7.  The apparatus according to any of claims 2 to 6, wherein the first means divides the plurality of tokens into the plurality of groups such that each group includes the same number of tokens.

8. The apparatus according to any of claims 2 to 7, wherein the second means includes at least one of Multi-head Self Attention (MSA), Multi-Layer Perceptron (MLP), and a fully connected layer.

9. The apparatus according to any of claims 1 to 8, further comprising task performing means (205) for performing a predetermined task using a neural network (NN) based on a feature amount obtained by the processing means.

10. The apparatus according to claim 9, wherein

the input data is image data, and
the predetermined task is one of an object detection task, a tracking task, and a class classification task.

11. The apparatus according to any of claims 1 to 10, wherein the generating means generates the feature amount using a convolutional neural network.

12. A control method (Fig. 5) of an information processing apparatus, comprising:

obtaining (S501, S502) input data;
generating (S503) a feature amount from the obtained input data; and
irregularly mixing (S504) a plurality of tokens included in the feature amount in a spatial direction of the generated feature amount.

13. The method according to claim 12, wherein the irregularly mixing includes:

irregularly dividing (S601) the plurality of tokens into a plurality of groups concerning the spatial direction of the feature amount; and
mixing (S602), for each of the plurality of groups, a plurality of tokens included in each group.

14. The method according to claim 13, wherein the irregularly mixing further includes returning (S603) positions of a plurality of tokens obtained by the mixing to positions in the spatial direction before the dividing.

15. The method according to any of claims 12 to 14, wherein in the generating, generating the feature amount using a convolutional neural network.

16. A program for causing a computer to function as an information processing apparatus according to any of claims 1 to 11.

# F I G. 1

EP 4 407 517 A1

# F I G. 2

100

| IMAGE OBTAINING UNIT | ~201 |
| PARAMETER OBTAINING UNIT | ~202 |
| FEATURE AMOUNT GENERATION UNIT | ~203 |
| FEATURE AMOUNT PROCESSING UNIT | ~204 |
| POST-PROCESSING UNIT | ~205 |

206

STORAGE
UNIT

# F I G. 3

204

| LAYER | ~301 |
| LAYER | ~302 |
| LAYER | ~303 |

# F I G. 4

LAYER

| | |
|---|---|
| GROUP DIVISION UNIT | ～401 |
| TOKEN MIX UNIT | ～402 |
| GROUP DIVISION CANCEL UNIT | ～403 |
| CHANNEL MIX UNIT | ～404 |

# F I G. 5

START

S501 — OBTAIN IMAGE

S502 — OBTAIN PARAMETERS

S503 — GENERATE FEATURE AMOUNTS

S504 — PROCESS FEATURE AMOUNTS

S505 — POST-PROCESSING

END

EP 4 407 517 A1

# F I G. 6

START

S601 — IRREGULARLY DIVIDE GROUPS

S602 — TOKEN MIX

S603 — CANCEL GROUP DIVISION

S604 — CHANNEL MIX

END

# FIG. 7A

701

| 0 | 1 | 2 | 3 |
| 4 | 5 | 6 | 7 |
| 8 | 9 | 10 | 11 |
| 12 | 13 | 14 | 15 |

# FIG. 7B

702

| 2 | 10 | 11 | 15 |
| 3 | 9 | 6 | 0 |
| 4 | 8 | 11 | 13 |
| 12 | 5 | 1 | 7 |

# FIG. 7C

703

GROUP 703-1

| 2 | 10 | 11 | 15 |

GROUP 703-2

| 3 | 9 | 6 | 0 |

GROUP 703-3

| 4 | 8 | 11 | 13 |

GROUP 703-4

| 12 | 5 | 1 | 7 |

# FIG. 7D

704

| 0 | 1 | 2 | 3 |
| 4 | 5 | 6 | 7 |
| 8 | 9 | 10 | 11 |
| 12 | 13 | 14 | 15 |

EP 4 407 517 A1

EP 4 407 517 A1

# FIG. 8A

801

802

# FIG. 8B

804    803

805

# FIG. 8C

806    811

810

807

808

809

# F I G. 9

```
        ┌─────────┐
        │  START  │
        └─────────┘
             │
             ▼
┌───────────────────────────┐
│        Convolution        │
└───────────────────────────┘
             │
             ▼
┌───────────────────────────┐
│           ReLU            │
└───────────────────────────┘
             │
             ▼
        ┌─────────┐
        │   END   │
        └─────────┘
```

# F I G. 10

```
        ┌─────────┐
        │  START  │
        └─────────┘
             │
             ▼
┌───────────────────────────┐
│      Fully Connected      │
└───────────────────────────┘
             │
             ▼
┌───────────────────────────┐
│      Fully Connected      │
└───────────────────────────┘
             │
             ▼
        ┌─────────┐
        │   END   │
        └─────────┘
```

# F I G.  11

LOCAL MIX UNIT ～1101

GROUP DIVISION UNIT ～401

TOKEN MIX UNIT ～402

GROUP DIVISION CANCEL UNIT ～403

CHANNEL MIX UNIT ～404

LAYER

# F I G.  12A

START

S1201 — LOCALLY DIVIDE GROUPS

S602 — TOKEN MIX

END

# F I G.  12B

START

S1203 — CNN

END

FIG. 13A

FIG. 13B

FIG. 13C

701

1302

GROUP 1302-1

| 0 | 1 | 4 | 5 |
|---|---|---|---|

GROUP 1302-2

| 2 | 3 | 6 | 7 |
|---|---|---|---|

GROUP 1302-3

| 8 | 9 | 12 | 13 |
|---|---|---|---|

GROUP 1302-4

| 10 | 11 | 14 | 15 |
|----|----|----|----|

704

## FIG. 15

START → CHANNEL DIVISION (S1501) → GROUP DIVISION (S1502) → TOKEN MIX (S602) → CANCEL GROUP DIVISION (S603) → CHANNEL CONNECTION (S1503) → CHANNEL MIX (S604) → END

## FIG. 14

LAYER

- CHANNEL DIVISION UNIT (1401)
- GROUP DIVISION UNIT (401)
- TOKEN MIX UNIT (402)
- GROUP DIVISION CANCEL UNIT (403)
- CHANNEL CONNECTION UNIT (1402)
- CHANNEL MIX UNIT (404)

# FIG. 16

**100**

| TRACKING TARGET DESIGNATION UNIT | 1601 |

| IMAGE OBTAINING UNIT | 201 |

| PARAMETER OBTAINING UNIT | 202 |

| FEATURE AMOUNT GENERATION UNIT | 203 |

| FEATURE AMOUNT PROCESSING UNIT | 204 |

| MATCHING UNIT | 1602 |

| POST-PROCESSING UNIT | 205 |

**206**

STORAGE UNIT

# F I G. 17

```
            ┌──────────┐
            │  START   │
            └──────────┘
                 │
        ┌────────┴────────────────────────┐
        ↓                                 ↓
S1701 ┌─────────────────┐      ┌─────────────────────────┐
      │ OBTAIN TEMPLATE │      │  OBTAIN SEARCH TARGET   │
      └─────────────────┘      └─────────────────────────┘
                 │                          │        S1703
                 ↓                          ↓
S1702 ┌─────────────────┐      ┌─────────────────────────┐
      │ CUT OUT TEMPLATE│      │   CUT OUT SEARCH AREA   │
      └─────────────────┘      └─────────────────────────┘
                 │                          │        S1704
                 ↓                          ↓
S503  ┌─────────────────┐      ┌─────────────────────────┐
      │ GENERATE FEATURE│      │   GENERATE FEATURE      │
      │    AMOUNTS      │      │      AMOUNTS            │
      └─────────────────┘      └─────────────────────────┘
                 │                          │        S503
                 ↓                          ↓
S504  ┌─────────────────┐      ┌─────────────────────────┐
      │ PROCESS FEATURE │      │   PROCESS FEATURE       │
      │    AMOUNTS      │      │      AMOUNTS            │
      └─────────────────┘      └─────────────────────────┘
                 │                          │        S504
        ┌────────┴──────────────────────────┘
        ↓
S1705 ┌─────────────────┐
      │    MATCHING     │
      └─────────────────┘
                 │
                 ↓
S505  ┌─────────────────┐
      │ POST-PROCESSING │
      └─────────────────┘
                 │
                 ↓
            ┌──────────┐
            │   END    │
            └──────────┘
```

22

EP 4 407 517 A1

# F I G. 18A

1801

1802

1803

1804

# F I G. 18B

1805

1806

1807

# F I G.  19

```
START MATCHING
       │
       ▼
```

S1901 — CROSS-CORRELATION

```
       │
       ▼
```

S1902 — CNN

```
       │
       ▼
  END MATCHING
```

# F I G.  20

100

IMAGE OBTAINING UNIT ～201

PARAMETER OBTAINING UNIT ～202

FEATURE AMOUNT
GENERATION UNIT ～203

FEATURE AMOUNT
PROCESSING UNIT ～204

IDENTIFICATION UNIT ～2001

POST-PROCESSING UNIT ～2002

206

STORAGE
UNIT

**F I G. 22**

START IDENTIFICATION → GAP (S2201) → MLP (S2202) → END IDENTIFICATION

**F I G. 21**

START → OBTAIN IMAGE (S501) → OBTAIN PARAMETERS (S502) → GENERATE FEATURE AMOUNTS (S503) → PROCESS FEATURE AMOUNTS (S504) → IDENTIFICATION (S2101) → POST-PROCESSING (S2102) → END

Europäisches
Patentamt

European
Patent Office

Office européen
des brevets

# EUROPEAN SEARCH REPORT

**Application Number**

EP 24 15 3715

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GUO JIANYUAN ET AL: "Hire-MLP: Vision MLP via Hierarchical Rearrangement", 2022 IEEE/CVF CONFERENCE ON COMPUTER VISION AND PATTERN RECOGNITION (CVPR), IEEE, 18 June 2022 (2022-06-18), pages 816-826, XP034194608, DOI: 10.1109/CVPR52688.2022.00090 [retrieved on 2022-09-27] * the whole document * | 1-16 | INV. G06N3/045 |
| A | HYEONG KYU CHOI ET AL: "TokenMixup: Efficient Attention-guided Token-level Data Augmentation for Transformers", ARXIV.ORG, CORNELL UNIVERSITY LIBRARY, 201 OLIN LIBRARY CORNELL UNIVERSITY ITHACA, NY 14853, 14 October 2022 (2022-10-14), XP091343926, * abstract * * Section 3; figures 1, 2 * | 1-16 | |
| A | LIU RUIYANG ET AL: "Are we ready for a new paradigm shift? A survey on visual deep MLP", PATTERNS, vol. 3, no. 7, 1 July 2022 (2022-07-01), XP093175004, DOI: 10.1016/j.patter.2022.100520 Retrieved from the Internet: URL:https://www.cell.com/patterns/pdf/S2666-3899(22)00117-9.pdf> * abstract * * page 2 - page 11; figures 2-6 * | 1-16 | **TECHNICAL FIELDS SEARCHED (IPC)** G06N |

The present search report has been drawn up for all claims

| Place of search | Date of completion of the search | Examiner |
|---|---|---|
| The Hague | 14 June 2024 | Malatesta, Lori |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6556033 B

**Non-patent literature cited in the description**

- **DOSOVITSKIY et al.** An Image is Worth 16x16 Words: Transformers for Image Recognition at Scale. *arXiv: 2010.11929,* 2020
- **YU et al.** Metaformer is Actually What You Need for Vision. *CVPR,* 2021
- **LIU et al.** Swin Transformer: Hierarchical Vision Transformer using Shifted Windows. *arXiv: 2103.14030,* 2021